(19) Europäisches Patentamt
European Patent Office
Office européen des brevets

(11) **EP 3 411 579 B1**

(12) **EUROPÄISCHE PATENTSCHRIFT**

(45) Veröffentlichungstag und Bekanntmachung des Hinweises auf die Patenterteilung:
**22.07.2020 Patentblatt 2020/30**

(21) Anmeldenummer: **17701883.5**

(22) Anmeldetag: **30.01.2017**

(51) Int Cl.:
*F02D 41/00* *(2006.01)*        *F02D 41/14* *(2006.01)*
*F02D 35/02* *(2006.01)*

(86) Internationale Anmeldenummer:
**PCT/EP2017/051909**

(87) Internationale Veröffentlichungsnummer:
**WO 2017/134003 (10.08.2017 Gazette 2017/32)**

(54) **VERFAHREN ZUM BERECHNEN EINER RESTGASMASSE IN EINEM ZYLINDER EINER VERBRENNUNGSKRAFTMASCHINE UND STEUERUNG**

METHOD FOR CALCULATING A RESIDUAL GAS MASS IN A CYLINDER OF AN INTERNAL COMBUSTION ENGINE AND CONTROLLER

PROCÉDÉ DE CALCUL D'UNE MASSE DE GAZ RÉSIDUEL DANS UN CYLINDRE D'UN MOTEUR À COMBUSTION INTERNE, ET COMMANDE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.02.2016 DE 102016201650**

(43) Veröffentlichungstag der Anmeldung:
**12.12.2018 Patentblatt 2018/50**

(73) Patentinhaber: **Volkswagen Aktiengesellschaft**
**38440 Wolfsburg (DE)**

(72) Erfinder:
• **MILLICH, Elmar**
**10999 Berlin (DE)**
• **PETERSEN, Lars**
**38536 Meinersen (DE)**
• **SHURKEWITSCH, Andre**
**19348 Perleberg (DE)**

(74) Vertreter: **MFG Patentanwälte**
**Meyer-Wildhagen Meggle-Freund**
**Gerhard PartG mbB**
**Amalienstraße 62**
**80799 München (DE)**

(56) Entgegenhaltungen:
**EP-A1- 2 162 802          DE-A1-102013 216 073**
**JP-B1- 5 826 346          US-A1- 2004 079 332**
**US-A1- 2014 000 554     US-A1- 2014 007 855**
**US-A1- 2015 330 326**

EP 3 411 579 B1

**Beschreibung**

Die Erfindung betrifft ein Verfahren zum Berechnen einer Restgasmasse in einem Zylinder einer Verbrennungskraftmaschine und eine Steuerung, die dazu eingerichtet ist, das Verfahren auszuführen.

Bei Verbrennungskraftmaschinen ist es bekannt, dass während des Betriebs eine bestimmte Restgasmasse im Zylinder verbleibt, das heißt auch nach der Verbrennung und während der Öffnung eines Auslassventils des Zylinders. Das Restgas oder auch Zylinderrestgas wird dabei durch Abgas gebildet.

Bekanntermaßen kann sich die Zylinderrestgasmasse aus unterschiedlichen Anteilen zusammensetzen. Zum einen hat ein Zylinder typischerweise ein Zylindertotvolumen, welches immer mit Zylinderrestgas gefüllt ist und nicht geleert wird. Zum anderen ist eine sogenannte innere Abgasrückführung bekannt, bei der durch eine (gewünschte) Ventilüberschneidung, d. h. gleichzeitig offenes Einlass- und Auslassventil (oder -ventile), Abgas aus einem Abgastrakt (z. B. Abgaskrümmer) über den Brennraum des Zylinders in einen Ansaugtrakt (z. B. Saugrohr) gelangt. Dadurch kann sich die Restgasmasse in dem Zylinder weiter erhöhen.

Die in einem Motorsteuergerät berechnete Zylinderrestgasmasse ist typischerweise maßgeblich für die exakte Bestimmung der Zylinderluftmasse, deren möglichst genaue Erfassung die Voraussetzung für eine stöchiometrische Kraftstoffeinspritzung ist. Ein stöchiometrisches Luft-Kraftstoffverhältnis kann verwendet werden, um nach entsprechender Abgasnachbehandlung die Abgasemissionen zu reduzieren.

In die Berechnung der Zylinderrestgasmasse gehen typischerweise sowohl bei physikalischen als auch bei parametrisierten Modellen Mess- und Modellparameter ein, wie bspw. die Drehzahl der Verbrennungskraftmaschine, die Phasenstellung einer Nockenwelle, eine Ventilstellung und dergleichen. Außerdem geht auch typischerweise die Abgastemperatur als Parameter in solche Modelle mit ein.

Die motorspezifische Bedatung der Parameter kann bekanntermaßen anhand von stationären Motorprüfstandsmessungen unter Normbedingungen erfolgen. Im dynamischen Betrieb einer Verbrennungskraftmaschine kann es aber durch Zündwinkeleingriffe, nicht ausreichende thermische Relaxationszeiten in den Abgastemperaturen oder dergleichen zu Abweichungen vom vermessenen Stationärbetrieb kommen, wodurch die berechnete Zylinderrestgasmasse ungenau werden kann.

Es ist bekannt, abweichende Abgastemperaturen sowohl bei physikalischen als auch parametrisierten Modellen durch die motorspezifische Bedatung von Parametern im Gesamtmodell zur Berechnung der Zylinderrestmasse zu berücksichtigen, was aber typischerweise aufwändig ist und eine hohe Rechenleistung und hohen Speicherbedarf erfordern kann.

Aus der deutschen Offenlegungsschrift DE 10 2005 055 952 A1 ist es außerdem bekannt, dass der Zusammenhang zwischen einer Luftfüllung in einem Brennraum eines Zylinders und einem gemessenen Saugrohrdruck nicht linear ist. Um eine einfache und genaue Bestimmung der sich in dem Brennraum befindlichen Luftmasse zu erreichen, schlägt die Offenlegungsschrift vor, einen Restgaspartialdruck des sich im Brennraum befindlichen Restgases zu ermitteln. Außerdem wird ein Luftpartialdruck der sich im Brennraum befindlichen Luft in Abhängigkeit von dem Restgaspartialdruck ermittelt. Die Luftmasse in dem Brennraum wird dann in Abhängigkeit von dem Restgaspartialdruck ermittelt.

Außerdem sind aus den Dokumenten US 2014/0007855 A1, US 2015/0330326 A1, WO 2008/142068 und DE 10 2013 216 073 A1 Verfahren zur Steuerung einer Verbrennungskraftmaschine bekannt, welche die Restgasmasse im Zylinder berücksichtigen.

Die im Stand der Technik bekannten Verfahren zur Ermittlung der Restgasmasse, die bspw. auf parametrisierten Modellen beruhen, haben den Nachteil, dass die Anzahl der Modelleingangsparameter in der Regel als Potenz in die benötigte Speicheranforderung und Rechenanforderung an das Motorsteuergerät eingehen. Werden Abgastemperaturen berücksichtigt, die von derjenigen des Stationärbetriebs abweichen, so steigt der Mess- und Applikationsaufwand.

Aufgabe der vorliegenden Erfindung ist es, ein verbessertes Verfahren zum Berechnen einer Restgasmasse in einem Zylinder einer Verbrennungskraftmaschine und eine Steuerung, die dazu eingerichtet ist, das Verfahren auszuführen, bereitzustellen, welche die oben genannten Nachteile wenigstens teilweise überwinden.

Diese Aufgabe wird durch das erfindungsgemäße Verfahren nach Anspruch 1 und die Steuerung nach Anspruch 2 gelöst.

Weitere vorteilhafte Aspekte der Erfindung ergeben sich aus den Unteransprüchen und der folgenden Beschreibung bevorzugter Ausführungsbeispiele der vorliegenden Erfindung.

Ein erfindungsgemäßes Verfahren zum Berechnen einer Restgasmasse in einem Zylinder einer Verbrennungskraftmaschine, wobei der Zylinder wenigstens ein Einlassventil und ein Auslassventil aufweist, umfasst:

Erhalten eines Basis-Zylinderrestgasmassewerts, der auf einem vorgegebenen Modell basiert;
Ermitteln eines ersten Zylinderrestgasmassewerts, der eine Zylinderrestgasmasse angibt, die nach einem Abgasausstoß im Zylindertotvolumen verbleibt;
Ermitteln eines zweiten Zylinderrestgasmassewerts, der eine Zylinderrestgasmasse angibt, die aufgrund einer Ventilüberschneidung des Einlassventils und des Auslassventils in den Zylinder strömt, wobei das Ermitteln des zweiten Zylinderrestgasmassewerts auf Grundlage des Basis-Zylinderrestgasmassewerts und des ersten Zylinderrestgasmassewerts erfolgt; und

Berechnen der Restgasmasse in dem Zylinder, basierend auf dem ersten und dem zweiten Zylinderrestgasmassewert.

Die Verbrennungskraftmaschine kann im Prinzip eine beliebige Verbrennungskraftmaschine sein, z. B. Ottomotor, Dieselmotor, etc. und sie kann eine beliebige Anzahl von Zylindern aufweisen (1, 2, 3, 4, 5, etc.).

Jeder Zylinder der Verbrennungskraftmaschine hat typischerweise (wenigstens) ein Einlassventil und ein Auslassventil. Außerdem hat der Zylinder einen Brennraum, in dem die Verbrennung des Kraftstoff-Luft-Gemisches stattfindet. Ferner hat der Zylinder typischerweise bau- und betriebsartbedingt ein Totvolumen. Dies ist dem Fachmann bekannt.

Durch das Einlassventil strömt Verbrennungsluft in den Zylinder bzw. in den Brennraum des Zylinders und das bei der Verbrennung entstehende Abgas strömt durch das Auslassventil aus dem Zylinder heraus.

Vor dem Einlassventil kann ein Ansaugtrakt, wie bspw. ein Saugrohr oder dergleichen vorgesehen sein, sodass Luft aus dem Ansaugtrakt durch das Einlassventil strömen kann.

Auf ähnliche Weise kann vor dem Auslassventil ein Abgastrakt, wie bspw. ein Abgaskrümmer oder dergleichen vorgesehen sehen, in den das Abgas aus dem Zylinder in den Abgastrakt strömt.

Bei der Ventilüberschneidung sind das Einlassventil und das Auslassventil gleichzeitig geöffnet, sodass, wie auch eingangs erwähnt, Abgas aus dem Abgastrakt durch das Auslassventil in den Brennraum und von dort durch das geöffnete Einlassventil in den Ansaugtrakt strömen kann. Dieses Abgas kann dann wiederum beim nächsten Takt in den Brennraum gelangen.

Wie eingangs erwähnt, ist für ein stöchiometrisches Luft-/Kraftstoffverhältnis im Brennraum die Kenntnis des im Brennraum befindlichen Restgases wichtig.

Zur Berechnung einer Restgasmasse in einem Zylinder sieht das Verfahren zunächst vor, einen Basis-Zylinderrestgasmassewert zu erhalten, der auf einem vorgegebenen Modell basiert. Der Basis-Zylinderrestgasmassewert kann bspw. vorab in einem Speicher einer Steuerung (z. B. Motorsteuergerät oder dergleichen), die das Verfahren ausführt, abgelegt sein oder über eine Schnittstelle (Busschnittstelle, Netzwerkschnittstelle oder dergleichen) abgerufen werden, um ihn zu erhalten.

Bei manchen Ausführungsbeispielen umfasst das Erhalten des Basis-Zylinderrestgasmassewerts auch das Berechnen und/oder Ermitteln desselbigen.

Der Basis-Zylinderrestgasmassewert kann dadurch erhalten werden, dass eine bestimmte, vorgegebene Verbrennungskraftmaschine in einem stationären Zustand unter Normbedingungen betrieben wird, zum Beispiel auf einem Prüfstand.

Dabei gewonnene Parameter der Verbrennungskraftmaschine, wie bspw. Abgastemperatur, Drehzahl, Saugrohrdruck, Phasenlage der Nockenwelle für bestimmte Ein- und Auslassventilstellungen, Ventilstellung, Abgasgegendruck, Temperatur der Verbrennungskraftmaschine, Ansauglufttemperatur können verwendet werden, um ein entsprechendes Motormodell an die Verbrennungskraftmaschine anzupassen. Mit Hilfe des derart angepassten Motormodells kann der Basis-Zylinderrestgasmassewert bei einer zugehörigen Abgastemperatur bestimmt werden. Diese Ermittlung des Basis-Zylinderrestgasmassewerts kann mit Hilfe eines sehr komplexen und damit auch sehr genauen Modells erfolgen, sodass der auf diese Art und Weise bestimmte Basis-Zylinderrestgasmassewert ebenfalls eine hohe Genauigkeit hat. Da die Verwendung eines solchen komplexen Motormodells typischerweise eine sehr hohe Rechenleistung erfordert, wird die Berechnung bei manchen Ausführungsbeispielen nicht von einem Motorsteuergerät oder dergleichen ausgeführt, sondern von einem entsprechend leistungsstarken Computer, der extern zum Kraftfahrzeug ist.

Bei manchen Ausführungsbeispielen wird der Basis-Zylinderrestgasmassewert auch durch eine entsprechende Messung an einer Verbrennungskraftmaschine durchgeführt, die bspw. unter stationären Prüfstandnormbedingungen betrieben wird.

Ferner ist vorgesehen, einen ersten Zylinderrestgasmassewert zu ermitteln, der eine Zylinderrestgasmasse angibt, die nach einem Abgasausstoß im Zylindertotvolumen verbleibt. Dieser erste Zylinderrestgasmassewert kann bspw. auf Grundlage eines vorgesehenen Modells oder einer Funktion oder dergleichen ermittelt werden, wie es auch grundsätzlich dem Fachmann bekannt ist. Diese Ermittlung kann bei manchen Ausführungsbeispielen in einer Steuerung, wie einem Motorsteuergerät, vorgenommen werden. Bei manchen Ausführungsbeispielen kann der erste Zylinderrestgasmassewert auch auf Grundlage des Basis-Zylinderrestgasmassewerts berechnet werden.

Außerdem ist vorgesehen, einen zweiten Zylinderrestgasmassewert zu ermitteln, der eine Zylinderrestgasmasse angibt, die bei einer Ventilüberschneidung des Einlassventils und des Auslassventils in den Zylinder strömt, wobei das Ermitteln des zweiten Zylinderrestgasmassewerts auf Grundlage des Basis-Zylinderrestgasmassewerts und des ersten Zylinderrestgasmassewerts erfolgt. Da bei manchen Ausführungsbeispielen sowohl der Basis-Zylinderrestgasmassewert als auch der erste Zylinderrestgasmassewert relativ genau bestimmt werden können, hat auf die Art und Weise auch der so ermittelte zweite Zylinderrestgasmassewert eine relativ hohe Genauigkeit.

Schlussendlich wird basierend auf dem ersten und dem zweiten Zylinderrestgasmassewert die (aktuelle bzw. dynamische) Restgasmasse in dem Zylinder, bspw. für eine aktuelle Abgastemperatur und/oder einen aktuellen Takt, eine aktuelle Ventilstellung oder dergleichen berechnet. Diese Berechnung kann ebenfalls in einer Steuerung, z. B. einem Motorsteuergerät vorgenommen werden.

Dadurch, dass insbesondere der Basis- Zylinderrestgasmassewert eine hohe Genauigkeit besitzt, können auch der erste und/oder zweite Zylinderrestgasmassewert mit einer hohen Genauigkeit ermittelt werden, sodass am Ende die berechnete Restgasmasse in dem Zylinder ebenfalls eine hohe Genauigkeit besitzt. Außerdem reduziert eine Auslagerung des Abgastemperatureinflusses unter dynamischen Bedingungen aus dem parametrisierten Modell unter Stationärbedingungen den Speicher- und Rechenaufwand bspw. im Motorsteuergerät. Weiterhin entfällt bei manchen Ausführungsbeispielen ein zusätzlicher Mess- und Applikationsaufwand, da die Korrektur der Restgasmasse im Zylinder im dynamischen Betrieb auf Grundlage physikalischer Gesetzmäßigkeiten erfolgen kann. Erfindungsgemäß wird der zweite Zylinderrestgasmassewert durch Subtraktion des ersten Zylinderrestgasmassewerts vom Basis-Zylinderrestgasmassewert ermittelt, was besonders einfach zu implementieren ist. Erfindungsgemäß wird, wie auch schon oben ausgeführt, der Basis-Zylinderrestgasmassewert für einen stationären Betriebszustand der Verbrennungskraftmaschine ermittelt. Dadurch kann, wie oben ausgeführt, der Basis-Zylinderrestgasmassewert besonders genau und bspw. mittels eines komplexen und damit sehr genauen Modells ermittelt werden und dies bei manchen Ausführungsbeispielen außerhalb des Motorsteuergeräts. Erfindungsgemäß wird weiter eine aktuelle Abgastemperatur ermittelt und die Restgasmasse in dem Zylinder wird in Abhängigkeit der aktuellen Abgastemperatur berechnet. Damit ist eine Berechnung der Restgasmasse im dynamischen Betrieb möglich.

Außerdem wird auf Grundlage des ersten Zylinderrestgasmassewerts und der aktuellen Abgastemperatur ein aktueller erster Zylinderrestgasmassewert berechnet und auf Grundlage des zweiten Zylinderrestgasmassewerts und der aktuellen Abgastemperatur ein aktueller zweiter Zylinderrestgasmassewert berechnet. Die Restgasmasse in dem Zylinder wird dann auf Grundlage des ersten aktuellen Zylinderrestgasmassewerts und des zweiten aktuellen Zylinderrestgasmassewerts berechnet, wodurch die Restgasmasse im dynamischen Betrieb berechnet wird.

Wie auch oben erwähnt, kann bei manchen Ausführungsbeispielen der erste Zylinderrestgasmassewert auf Grundlage eines vorgegebenen Modells ermittelt werden, wobei das vorgegebene Modell, auf Grundlage dessen der Basis-Zylinderrestgasmassewert erhalten wird, komplexer sein kann, als das vorgegebene Modell, auf Grundlage dessen der erste Zylinderrestgasmassewert ermittelt wird. Der erste Zylinderrestgasmassewert wird dabei bspw. im Motorsteuergerät berechnet und der Basis-Zylinderrestgasmassewert wird vorab mittels eines leistungsstärkeren Computers berechnet und dann in dem Motorsteuergerät zur späteren Verwendung abgelegt. Dadurch ist eine genaue Berechnung der Restmasse in dem Zylinder möglich, ohne bspw. das Motorsteuergerät hinsichtlich seiner Rechenleistung und Speicherkapazität für komplexe Berechnungen, wie sie bei dem Basis-Zylinderrestgasmassewert erforderlich sind, auszurüsten.

Mathematisch lässt sich das Vorgehen wie folgt zusammenfassen:

Die Restgasmasse $m_{RG0}$ im Zylinder im stationären Betrieb bei einer Abgastemperatur To, die sich im stationären Betrieb einstellt, setzt sich zusammen aus dem ersten Zylinderrestgasmassewert $m_{tot0}$ im Zylindertotvolumen und dem zweiten Zylinderrestgasmassewert $m_{res0}$, der der aufgrund der Ventilüberschneidung zurückströmenden Restgasmasse entspricht:

$$m_{RG0} = m_{tot0} + m_{res0}$$

Die Restgasmasse $m_{RG0}$ wird, wie oben beschrieben, anhand eines komplexen Modells bspw. extern und vorab mit einem leistungsstarken Computer ermittelt, wobei das komplexe Modell mit Parametern, wie oben erwähnt, gefüttert wird, die durch den Betrieb der Verbrennungskraftmaschine unter stationären Prüfstandnormbedingungen ermittelt werden.

Der gleiche Zusammenhang ergibt sich für den dynamischen Betrieb, das heißt die (aktuelle) Restgasmasse $m_{RG1}$ im Zylinder im dynamischen Betrieb bei einer Abgastemperatur $T_1$ setzt sich zusammen aus dem ersten (aktuellen) Zylinderrestgasmassewert $m_{tot1}$ im Zylindertotvolumen und dem zweiten (aktuellen) Zylinderrestgasmassewert $m_{res1}$, der der aufgrund der Ventilüberschneidung zurückströmenden Restgasmasse entspricht:

$$m_{RG1} = m_{tot1} + m_{res1}$$

Der erste (aktuelle) Zylinderrestgasmassewert $m_{tot1}$ und der zweite (aktuelle) Zylinderrestgasmassewert $m_{res1}$ zeigen dabei ein physikalisch unterschiedliches Transformationsverhalten:

$$m_{tot1} = m_{tot0} \cdot \frac{T_0}{T_1}$$

$$m_{res1} = m_{res0} \cdot \sqrt{\frac{T_0}{T_1}}$$

Aus diesen Formeln lassen sich der erste (aktuelle) Zylinderrestgasmassewert $m_{tot1}$ und der zweite (aktuelle) Zylinderrestgasmassewert $m_{res1}$ aus den zugehörigen Werten, die im Stationärbetrieb ermittelt wurden, ableiten, wobei die Abgastemperatur $T_{0'}$ im Stationärbetrieb und die (aktuelle) Abgastemperatur $T_{1'}$ im dynamischen Betrieb bekannt sind.

Damit kann die aktuelle Restgasmasse $m_{RG1}$ im dynamischen Betrieb berechnet werden.

Manche Ausführungsbeispiele betreffen eine Steuerung, insbesondere ein Motorsteuergerät, für eine Verbrennungskraftmaschine eines Kraftfahrzeugs, einen Prozessor und einen Speicher umfassend, wobei die Steuerung dazu eingerichtet ist, das beschriebene Verfahren auszuführen.

Manche Ausführungsbeispiele betreffen auch ein Kraftfahrzeug mit einer Verbrennungskraftmaschine mit Zylinder(n) und einer solchen Steuerung. Ausführungsbeispiele der Erfindung werden nun beispielhaft und unter Bezugnahme auf die beigefügte Zeichnung beschrieben, in der:

Fig. 1 schematisch ein Ausführungsbeispiel eines Zylinders während einer Ventilüberschneidung zeigt,

Fig. 2 schematisch ein Motorsteuergerät zeigt; und

Fig. 3 ein Ablaufschema eines Verfahrens zum Berechnen einer Restgasmenge zeigt.

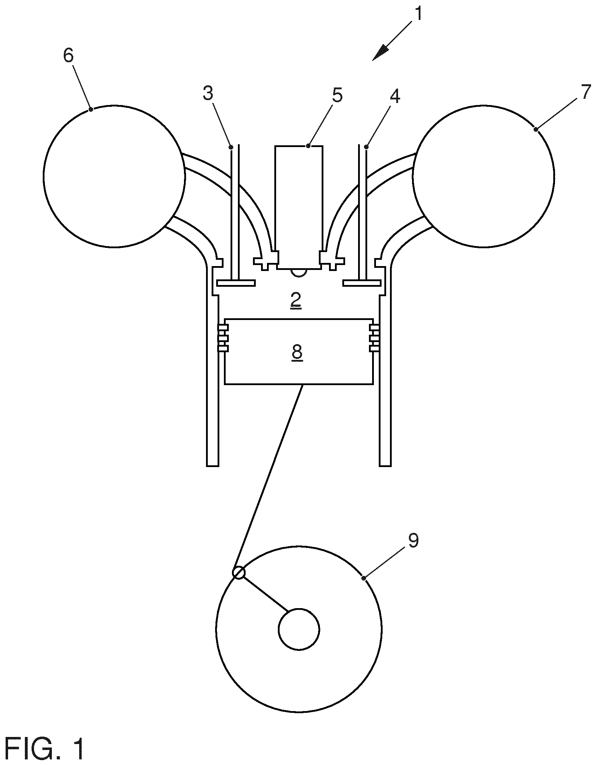

Ein Ausführungsbeispiel eines Zylinders 1 einer Verbrennungskraftmaschine ist in Fig. 1 schematisch veranschaulicht. Der Zylinder 1 hat einen Brennraum 2, in dem die Verbrennung von Kraftstoff stattfindet, der über ein Einspritzventil 5 eingespritzt wird. Der Zylinder 1 hat ein Einlassventil 3, das mit einem Saugrohr 5 gekoppelt ist, aus dem Verbrennungsluft in den Zylinder 1 durch das Einlassventil 3 in den Brennraum 2 gelangt. Außerdem hat der Zylinder 1 ein Auslassventil 4, das mit einem Abgaskrümmer 7 gekoppelt ist, und durch welches Abgas aus dem Brennraum 2 in den Abgaskrümmer 7 geleitet wird. Ferner ist ein Zylinderkolben 8 vorhanden, der von einer Kurbelwelle 9 angetrieben wird, wie es dem Fachmann grundsätzlich bekannt ist.

In der Fig. 1 ist der Zylinder 1 in einer Ventilüberschneidungsstellung veranschaulicht, bei der sowohl das Einlassventil 3 als auch das Auslassventil 4 geöffnet sind, sodass Abgas aus dem Abgaskrümmer 7 durch den Brennraum 2 in das Saugrohr 6 gelangen kann und von dort in einem nächsten Arbeitsgang wieder aus dem Saugrohr 6 in den Brennraum 2 strömen kann.

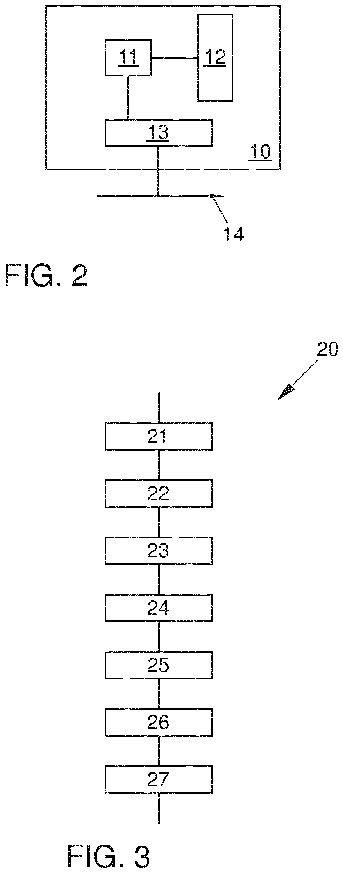

Fig. 2 veranschaulicht ein Motorsteuergerät 10, welches dazu eingerichtet ist, das hierin beschriebene Verfahren zum Berechnen einer Restgasmasse in einem Zylinder einer Verbrennungskraftmaschine auszuführen, das auch weiter unten im Zusammenhang mit Fig. 3 beschrieben wird.

Das Motorsteuergerät 10 hat einen Prozessor 11, einen Speicher 12 und eine Schnittstelle 13, um mit einem Bussystem 14 zu kommunizieren. Die Schnittstelle 13 ist hier exemplarisch eine CAN-Busschnittstelle und das Bussystem 14 ein CAN-Bussystem, ohne dass die vorliegende Erfindung in dieser Hinsicht beschränkt ist.

Das Motorsteuergerät 10 führt ein Verfahren 20 (Fig. 3) zum Berechnen einer Restgasmasse in einem Zylinder, wie dem Zylinder 1 von Fig. 1, aus. Dabei ist das Motorsteuergerät 10 so eingerichtet, dass der Prozessor 11 das hierin beschriebene Verfahren ausführt.

Bei 21 erhält das Motorsteuergerät 10 einen Basis-Zylinderrestgasmassewert, der auf einem vorgegebenen Modell basiert, wie es auch schon weiter oben ausgeführt wurde. Das vorgegebene Modell ist komplex und der Basis-Zylinderrestgasmassewert wird ermittelt, indem die Verbrennungskraftmaschine stationär auf einem Prüfstand und unter Normbedingungen betrieben wird. Parameter, die dabei erhalten werden, wie bspw. auch die stationäre Abgastemperatur ($T_0$) werden für das Modell verwendet, um den Basis-Zylinderrestgasmassewert ($m_{RG0}$) möglichst exakt für den stationären Betrieb zu ermitteln. Der Basis-Zylinderrestgasmassewert ist in dem Speicher 12 gespeichert und der Prozessor 11 kann ihn entsprechend erhalten, indem er ihn aus dem Speicher 12 abruft.

Bei 22 ermittelt das Motorsteuergerät 10 einen ersten Zylinderrestgasmassewert ($m_{tot0}$), der eine Zylinderrestgasmasse angibt, die nach einem Abgasausstoß im Zylindertotvolumen verbleibt, wie es auch schon oben beschrieben wurde. Der erste Zylinderrestgasmassewert wird hier für die im Stationärbetrieb ermittelte Abgastemperatur ($T_0$) ermittelt. Dieser Wert kann bspw. auch im Speicher 11 vorab gespeichert werden oder dynamisch auf Grundlage eines vorgegebenen Modells ermittelt werden.

Bei 23 ermittelt das Motorsteuergerät 10 einen zweiten Zylinderrestgasmassewert ($m_{res0}$), der eine Zylinderrestgasmasse angibt, die aufgrund einer Ventilüberschneidung des Einlassventils 3 und des Auslassventils 4 in den Zylinder 1 strömt, wobei das Ermitteln des zweiten Zylinderrestgasmassewerts auf Grundlage des Basis-Zylinderrestgasmassewerts und des ersten Zylinderrestgasmassewerts erfolgt, indem der zweite Zylinderrestgasmassewert durch Subtraktion des ersten Zylinderrestgasmassewerts vom Basis-Zylinderrestgasmassewert ermittelt wird.

Bei 24 ermittelt das Motorsteuergerät 10 im dynamischen Betrieb eine aktuelle Abgastemperatur ($T_1$), indem es diese entweder über das Bussystem 14 abruft (z. B. von einem entsprechenden Temperatursensor) und/oder aufgrund eines im Motorsteuergerät 10 vorgesehenen Modells berechnet.

Bei 25 berechnet das Motorsteuergerät 10 auf Grundlage des ersten Zylinderrestgasmassewerts ($m_{tot0}$) und der aktuellen Abgastemperatur ($T_1$) einen aktuellen ersten Zylinderrestgasmassewert ($m_{tot1}$), wie es auch oben ausgeführt wurde.

Bei 26 berechnet das Motorsteuergerät 10 auf Grundlage des zweiten Zylinderrestgasmassewerts ($m_{res0}$) und der aktuellen Abgastemperatur ($T_1$) einen aktuellen zweiten Zylinderrestgasmassewert ($m_{res1}$), wie es auch oben ausgeführt wurde.

Bei 27 berechnet das Motorsteuergerät 10 die aktuelle Restgasmasse ($m_{RG1}$) in dem Zylinder 1 auf Grundlage des ersten aktuellen Zylinderrestgasmassewerts ($m_{tot1}$) und des zweiten aktuellen Zylinderrestgasmassewerts ($m_{res1}$), wie es auch oben ausgeführt wurde.

Das Verfahren 20 kann für jeden Zylinder einer Verbrennungskraftmaschine durchgeführt werden.

**Bezugszeichenliste**

1 Zylinder
2 Brennraum
3 Einlassventil
4 Auslassventil
5 Einspritzventil
6 Saugrohr
7 Abgaskrümmer
8 Zylinderkolben
9 Kurbelwelle
10 Motorsteuergerät
11 Prozessor
12 Speicher
13 Schnittstelle
14 Bus
20 Verfahren zum Berechnen einer Restgasmasse in einem Zylinder einer Verbrennungskraftmaschine
21 Erhalten eines Basis-Zylinderrestgasmassewerts
22 Ermitteln eines ersten Zylinderrestgasmassewerts
23 Ermitteln eines zweiten Zylinderrestgasmassewerts
24 Ermitteln einer aktuellen Abgastemperatur
25 Berechnen eines ersten aktuellen Zylinderrestgasmassewerts
26 Berechnen eines zweiten aktuellen Zylinderrestgasmassewerts
27 Berechnen der Restgasmasse in dem Zylinder

**Patentansprüche**

1. Verfahren zum Berechnen einer aktuellen Restgasmasse in einem Zylinder (1) einer Verbrennungskraftmaschine, wobei der Zylinder wenigstens ein Einlassventil (3) und ein Auslassventil (4) aufweist, umfassend:

Erhalten (21) eines Basis-Zylinderrestgasmassewerts $m_{RG0}$ für einen stationären Betriebszustand der Verbrennungskraftmaschine bei einer Abgastemperatur To, wobei der Basis-Zylinderrestgasmassewert $m_{RG0}$ auf einem vorgegebenen Modell basiert;

Ermitteln (22) eines ersten Zylinderrestgasmassewerts $m_{tot0}$, der eine Zylinderrestgasmasse angibt, die nach einem Abgasausstoß im Zylindertotvolumen verbleibt, wobei der erste Zylinderrestgasmassewert $m_{tot0}$ für die im stationären Betriebszustand ermittelte Abgastemperatur $T_0$ einem vorab gespeicherten Wert entspricht oder dynamisch auf Grundlage eines vorgegebenen Modells erhalten wird;

Ermitteln (23) eines zweiten Zylinderrestgasmassewerts $m_{res0}$, der eine Zylinderrestgasmasse angibt, die aufgrund einer Ventilüberschneidung des Einlassventils und des Auslassventils in den Zylinder strömt, wobei gilt:

$$m_{RG0} = m_{tot0} + m_{res0}$$

,

wobei der zweite Zylinderrestgasmassewert $m_{res0}$ durch Subtraktion des ersten Zylinderrestgasmassewerts $m_{tot0}$ vom Basis-Zylinderrestgasmassewert $m_{RG0}$ ermittelt wird;

Ermitteln (24) einer aktuellen Abgastemperatur $T_1$; und

Berechnen (27) der aktuellen Restgasmasse $m_{RG1}$ in dem Zylinder, basierend auf einem ersten aktuellen Zylinderrestgasmassewert $m_{tot1}$ und einem zweiten aktuellen Zylinderrestgasmassewert $m_{res1}$, wobei gilt:

$$m_{RG1} = m_{tot1} + m_{res1}$$

,

wobei der erste aktuelle Zylinderrestgasmassewert $m_{tot1}$ gemäß

$$m_{tot1} = m_{tot0} \cdot \frac{T_0}{T_1}$$

berechnet wird und der zweite aktuelle Zylinderrestgasmassewert $m_{res1}$ gemäß

$$m_{res1} = m_{res0} \cdot \sqrt{\frac{T_0}{T_1}}$$

berechnet wird.

2. Steuerung für eine Verbrennungskraftmaschine eines Kraftfahrzeugs, einen Prozessor (11) und einen Speicher (12) umfassend, wobei die Steuerung (10) dazu eingerichtet ist, das Verfahren nach Anspruch 1 auszuführen.

**Claims**

1. Method for calculating a present residual gas mass in a cylinder (1) of an internal combustion engine, wherein the cylinder has at least one inlet valve (3) and one outlet valve (4), comprising:

obtaining (21) a base cylinder residual gas mass value $m_{RG0}$ for a steady-state operating state of the internal combustion engine in the case of an exhaust-gas temperature $T_0$, wherein the base cylinder residual gas mass value $m_{RG0}$ is based on a predefined model;

determining (22) a first cylinder residual gas mass value $m_{tot0}$ which indicates a cylinder residual gas mass that remains in the cylinder dead volume after a discharge of exhaust gas, wherein the first cylinder residual gas mass value $m_{tot0}$ for the exhaust-gas temperature $T_0$ determined in the steady-state operating state corresponds to a previously stored value, or is obtained dynamically on the basis of a predefined model;

determining (23) a second cylinder residual gas mass value $m_{res0}$ which indicates a cylinder residual gas mass that flows into the cylinder owing to a valve overlap of the inlet valve and of the outlet valve, wherein the following applies:

$$m_{RG0} = m_{tot0} + m_{res0},$$

wherein the second cylinder residual gas mass value $m_{res0}$ is determined by subtracting the first cylinder residual gas mass value $m_{tot0}$ from the base cylinder residual gas mass value $m_{RG0}$;
determining (24) a present exhaust-gas temperature $T_1$; and
calculating (27) the present residual gas mass $m_{RG1}$ in the cylinder on the basis of a first present cylinder residual gas mass value $m_{tot1}$ and a second present cylinder residual gas mass value $m_{res1}$, wherein the following applies:

$$m_{RG1} = m_{tot1} + m_{res1},$$

wherein the first present cylinder residual gas mass value $m_{tot1}$ is calculated in accordance with

$$m_{tot1} = m_{tot0} \cdot \frac{T_0}{T_1}$$

and the second present cylinder residual gas mass value $m_{res1}$ is calculated in accordance with

$$m_{res1} = m_{res0} \cdot \sqrt{\frac{T_0}{T_1}}.$$

2. Controller for an internal combustion engine of a motor vehicle, comprising a processor (11) and a memory (12), wherein the controller (10) is configured to carry out the method according to Claim 1.

**Revendications**

1. Procédé pour calculer une masse de gaz résiduel actuelle dans un cylindre (1) d'un moteur à combustion interne, le cylindre possédant au moins une soupape d'admission (3) et une soupape d'échappement (4), comprenant :

l'obtention (21) d'une valeur de masse de gaz résiduel de cylindre de base $m_{RG0}$ pour un état de fonctionnement stationnaire du moteur à combustion interne à une température des gaz d'échappement To, la valeur de masse de gaz résiduel de cylindre de base $m_{RG0}$ se basant sur un modèle prédéfini ;
la détermination (22) d'une première valeur de masse de gaz résiduel de cylindre $m_{tot0}$, laquelle indique une masse de gaz résiduel de cylindre qui demeure dans le volume perdu de cylindre après une expulsion des gaz d'échappement, la première valeur de masse de gaz résiduel de cylindre $m_{tot0}$ pour la température des gaz d'échappement $T_0$ déterminée à l'état de fonctionnement stationnaire correspondant à une valeur préalablement enregistrée ou étant obtenue dynamiquement sur la base d'un modèle prédéfini ;
la détermination (23) d'une deuxième valeur de masse de gaz résiduel de cylindre $m_{res0}$, laquelle indique une masse de gaz résiduel de cylindre qui s'écoule dans le cylindre en raison d'un chevauchement de soupapes de la soupape d'admission et de la soupape d'échappement, avec pour règle :

$$m_{RG0} = m_{tot0} + m_{res0},$$

la deuxième valeur de masse de gaz résiduel de cylindre $m_{res0}$ étant déterminée en soustrayant la première valeur de masse de gaz résiduel de cylindre $m_{tot0}$ de la valeur de masse de gaz résiduel de cylindre de base $m_{RG0}$ ;

la détermination (24) d'une température des gaz d'échappement actuelle $T_1$ ; et

le calcul (27) de la masse de gaz résiduel actuelle $m_{RG1}$ dans le cylindre en se basant sur une première valeur de masse de gaz résiduel de cylindre actuelle $m_{tot1}$ et une deuxième valeur de masse de gaz résiduel de cylindre actuelle $m_{res1}$, avec pour règle :

$$m_{RG1} = m_{tot1} + m_{res1},$$

la première valeur de masse de gaz résiduel de cylindre actuelle $m_{tot1}$ étant calculée selon

$$m_{tot1} = m_{tot0} \cdot \frac{T_0}{T_1}$$

et la deuxième valeur de masse de gaz résiduel de cylindre actuelle $m_{res1}$ étant calculée selon

$$m_{res1} = m_{res0} \cdot \sqrt{\frac{T_0}{T_1}}.$$

2. Commande pour un moteur à combustion interne d'un véhicule automobile, comprenant un processeur (11) et une mémoire (12), la commande (10) étant conçue pour mettre en œuvre le procédé selon la revendication 1.

FIG. 1

FIG. 2

FIG. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102005055952 A1
- US 20140007855 A1
- US 20150330326 A1
- WO 2008142068 A
- DE 102013216073 A1